# EUROPÄISCHE PATENTANMELDUNG

(11) **EP 0 751 659 A2**
(43) Veröffentlichungstag der Anmeldung: **02.01.1997**
(21) Anmeldenummer: 95117406.9
(22) Anmeldetag: 06.11.1995
(51) Int. Cl.: H04M 1/72

(54) **Anordnung zum Anschluss mehrerer Telekommunikationskabel**

(30) Priorität: 27.06.1995 DE 19523276
(71) Anmelder: Deutsche Telekom AG, 53105 Bonn (DE)
(72) Erfinder: Simon, Werner, Dipl.-Ing., D-64289 Darmstadt (DE); Schmitt, Bernhard, Dipl.-Ing., D-53604 Bad Honnef (DE)

(57) **Zusammenfassung**

Bei einer Anordnung zum Anschluß mehrerer Telekommunikationskabel, vorzugsweise für ein Einfamilienhaus oder eine Wohnung, ist für die anzuschließenden Telekommunikationskabel je eine Anschlußvorrichtung fest angeordnet. Die Anschlußvorrichtungen sind über Verbindungselemente verbindbar. Bei zuvor verlegten Telekommunikationskabeln und Anschlußdosen ist die Installation von Endgeräten für den technisch nicht versierten Benutzer in einfacher Weise möglich.

## Beschreibung

Die Erfindung betrifft eine Anordnung zum Anschluß mehrerer Telekommunikationskabel, vorzugsweise für ein Einfamilienhaus oder eine Wohnung.

In modern ausgestalteten Einfamilienhäusern oder in größeren Wohnungen wird meistens für jeden Raum die Möglichkeit der Installation mindestens eines Endgerätes, wie beispielsweise Telefon, Fernkopierer, Anrufbeantworter, Personalcomputer mit Modem usw., vorgesehen. Dazu werden Anschlußdosen in den einzelnen Räumen durch unter Putz verlegte Kabel oder Leerrohre mit einem zentralen Verteilungs- oder Versorgungsplatz verbunden, der meist im Keller, Flur oder Hausanschlußbereich angeordnet ist.

In der Regel ist bei Endgeräten für Privatanwendungen eine Installation durch den Erwerber bzw. Benutzer vorgesehen. Diese Selbstinstallation ist im allgemeinen für technisch nicht versierte Benutzer schwierig, da es beim Verlegen und Verbinden von Kabeln zu Irrtümern und Verwechslungen kommen kann.

Aufgabe der vorliegenden Erfindung ist es daher, eine Anordnung zu schaffen, welche die Installation auch für Laien in einfacher und sicherer Weise ermöglicht. Diese Aufgabe wird erfindungsgemäß dadurch gelöst, daß für die anzuschließenden Telekommunikationskabel je eine Anschlußvorrichtung fest angeordnet ist und daß die Anschlußvorrichtungen über Verbindungselemente verbindbar sind. Vorzugsweise sind den Anschlußvorrichtungen Beschriftungsfelder zugeordnet.

Die erfindungsgemäße Anordnung ermöglicht die Verbindung von zuvor verlegten Telekommunikationskabeln in übersichtlicher und einfacher Weise und ohne Werkzeug. Auch bei einer späteren Änderung der Verteilung der Endgeräte auf die einzelnen Räume ist kein mühseliges Suchen und Entwirren der betroffenen Drahtverbindungen erforderlich. Sowohl bei der Neuinstallation als auch bei Änderungen ist lediglich ein einfaches Umstecken erforderlich. Die Bezeichnung der Anschlußvorrichtung mit den einzelnen Räumen und anderen Orten der Anschlußdosen erfolgt zweckmäßigerweise in genügend großer Schrift, damit auch unter ungünstigen Bedingungen - wie beispielsweise mangelhafte Beleuchtung - die Angaben erkennbar sind.

Eine vorteilhafte Ausgestaltung der Erfindung besteht darin, daß mindestens ein Teil der Anschlußvorrichtungen jeweils eine Steckvorrichtung umfaßt und daß die Verbindungselemente steckbare Leitungen sind. Diese steckbaren Leitungen können an sich in vielfältiger Weise ausgebildet sein, beispielsweise als steckbare Drahtbrücken, orzugsweise ist bei dieser Ausgestaltung vorgesehen, daß die steckbaren Leitungen flexibel und mindestens an jeweils einem Ende mit einem zur Steckvorichtung passenden Stecker versehen sind. Das andere Ende kann dann je nach Erfordernissen im Einzelfall auch mit einem Stecker versehen oder fest mit der jeweiligen Anschlußvorrichtung verbunden sein.

Anstelle der steckbaren Leitungen können die Verbindungselemente der erfindungsgemäßen Anordnung auch Schalter sein.

Eine vorteilhafte Weiterbildung der Erfindung besteht darin, daß die Anschlußvorrichtungen in zwei Gruppen angeordnet sind, wobei eine erste Gruppe für Telekommunikationskabel, die zu einzelnen Endgeräten führen, und eine zweite Gruppe für eine Vermittlungseinrichtung und/oder nach außen führende Telekommunikationskabel vorgesehen ist.

Diese Weiterbildung stellt sich dem Benutzer besonders übersichtlich dar, zumal die Leitungen in der Regel jeweils eine Anschlußvorrichtung der einen Gruppe mit einer Anschlußvorrichtung der anderen Gruppe verbinden. Im Bedarfsfall können jedoch auch Ausnahmen zugelassen werden, um beispielsweise zwei Räume mit einer Wechselsprechanlage zu verbinden, die ansonsten keine Verbindung zu anderen Telekommunikationseinrichtungen hat.

Soll die erfindungsgemäße Anordnung lediglich zusammen mit einem als TAE-Dose ausgeführten Anschluß an das Telekommunikationsnetz ohne die Verwendung einer Nebenstellenanlage betrieben werden, wird eine besonders einfache Möglichkeit zur Verbindung der erfindungsgemäßen Anordnung mit der TAE-Dose dadurch geschaffen, daß mindestens eine der Anschlußvorrichtungen der zweiten Gruppe fest mit einer weiteren Steckvorrichtung, vorzugsweise mit einer Western-Buchse, verbunden ist. Damit ist es möglich, die erfindungsgemäße Anordnung mit Hilfe eines auf dem Markt erhältlichen Adapterkabels an die TAE-Dose anzuschließen.

Bei dieser Weiterbildung kann vorgesehen sein, daß die Gruppen aus jeweils einer Reihe von Anschlußvorrichtungen bestehen und insbesondere die Reihen rechtwinklig zueinander angeordnet sind. Durch diese Ausgestaltungen der Weiterbildung ist eine besonders übersichtliche Einteilung gegeben.

Eine andere vorteilhafte Weiterbildung der erfindungsgemäßen Anordnung besteht darin, daß die Anschlußvorrichtungen in einem Einsatz für einen Schaltkasten angeordnet sind.

Neben der Verwendung der erfindungsgemäßen Anordnung für die eigentliche Telekommunikation, nämlich für den Betrieb verschiedener Endgeräte innerhalb eines Einfamilienhauses oder einer Wohnung, eignet sich die Anordnung auch für andere Anwendungen. So sind beispielsweise bei einer anderen vorteilhaften Ausführungsform weitere fest angeordnete Anschlußvorrichtungen für eine Türsprechanlage vorgesehen.

Ein Ausführungsbeispiel der Erfindung ist in der Zeichnung anhand mehrerer Figuren dargestellt und in der nachfolgenden Beschreibung näher erläutert. Es zeigt:
- Fig. 1: eine Ansicht des Ausführungsbeispiels und
- Fig. 2: eine erfindungsgemäße Anordnung innerhalb einer Telekommunikationsanlage in einem Einfamilienhaus.

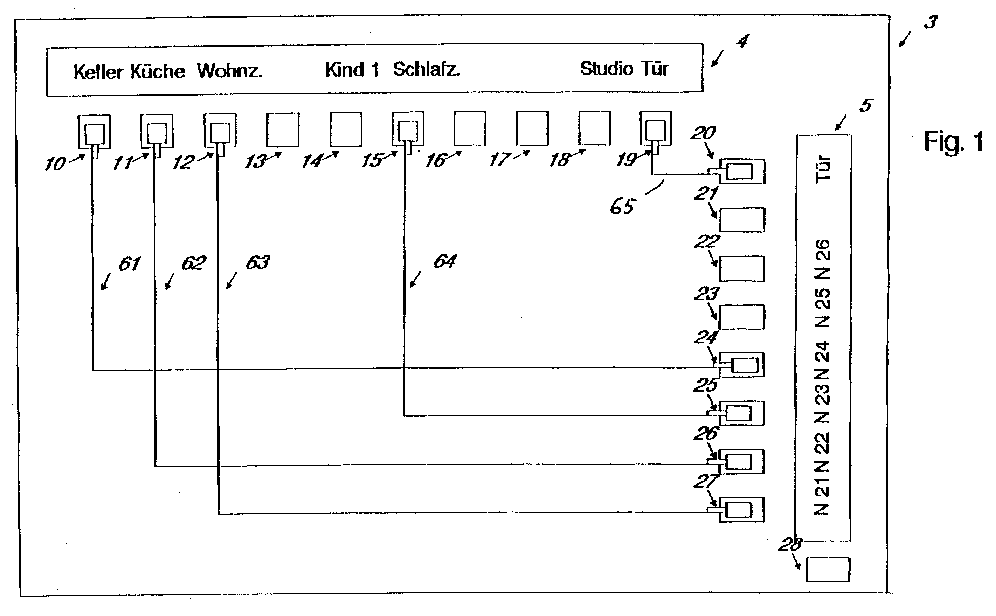

Die in Fig. 1 dargestellte Anordnung umfaßt Steckvorrichtungen 10 bis 19, die in einer waagerechten Reihe angeordnet sind und Steckvorrichtungen 20 bis 27 in einer senkrechten Reihe. Die Steckvorrichtungen 10 bis 19 sind zur Verbindung mit in einzelnen Räumen befindlichen Endgeräten vorgesehen. Je nach Anzahl der vorsorglich installierten Anschlußdosen und Telekommunikationskabel sind einige der Steckvorrichtungen nicht mit Telekommunikationskabeln verbunden. Die nicht benötigten Steckvorrichtungen können bei der Erstinstallation in einer Wohnung oder in einem Haus auch fortgelassen und bei einer späteren Erweiterung ergänzt werden. Dazu können in einer Grundplatte 3 geeignete Öffnungen vorgesehen sein, in die sich nachträglich zu ergänzende Steckvorrichtungen in einfacher Weise einsetzen lassen.

Auf Beschriftungsfeldern 4, 5 können die Bezeichnungen für die Steckvorrichtungen aufgebracht werden, beispielsweise die Räume, in denen sich die Anschlußdosen für Endgeräte befinden, oder die Rufnummern von Anschlüssen einer Nebenstellenanlage - in dem dargestellten Ausführungsbeispiel bei den Steckvorrichtungen 22 bis 27. Die Verbindungen zwischen den einzelnen Steckvorrichtungen erfolgt in einfacher Weise durch Leitungen 61 bis 64, an deren Enden zu den Steckvorrichtungen passende Stecker montiert sind. Eine weitere Leitung 65 verbindet die Steckvorrichtungen 19 und 20 für eine Türsprecheinrichtung.

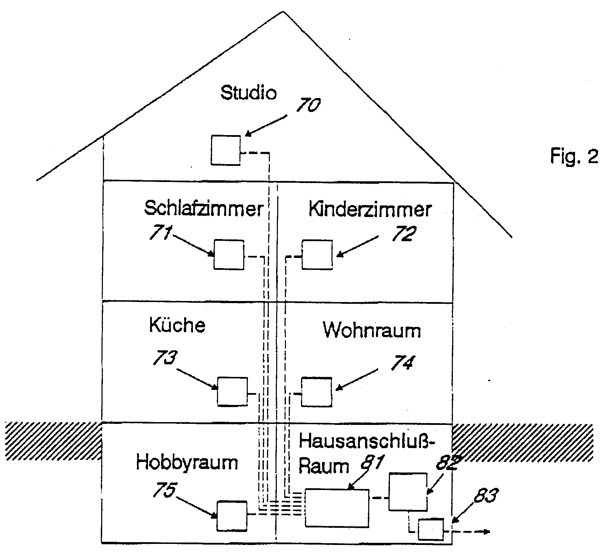

Bei der in Fig. 2 dargestellten Hausanlage befinden sich in den einzelnen Räumen Anschlußdosen 70 bis 75. In einem Hausanschlußraum im Keller sind ein Netzabschluß 81, eine Nebenstellenanlage 82 sowie eine erfindungsgemäße Anordnung 83 vorgesehen. Ein Vergleich mit Fig. 1 zeigt, daß im Kinderzimmer und im Studio keine Endgeräte angeschlossen bzw. mit der Nebenstellenanlage 82 verbunden sind. Soll beispielsweise im Studio ein Telefon installiert werden, so braucht der Telefonstecker nur in die Anschlußdose 70 (Fig. 2) eingesteckt zu werden und die Stecker einer zusätzlichen Leitung in die Steckvorrichtung 19 (Fig. 1) und je nach gewünschter Rufnummer in eine der Steckvorrichtungen 22 oder 23 eingesteckt zu werden.

Soll die erfindungsgemäße Anordnung lediglich zusammen mit einem als TAE-Dose ausgeführten Anschluß an das Telekommunikationsnetz ohne die Verwendung einer Nebenstellenanlage betrieben werden, kann die erfindungsgemäße Anordnung mit einem einfachen Adapterkabel mit der TAE-Dose verbunden werden. Dazu ist bei dem dargestellten Ausführungsbeispiel eine Western-Buchse 28 vorgesehen, die fest mit der Steckvorrichtung 27 verbunden ist.

## Patentansprüche

1. Anordnung zum Anschluß mehrerer Telekommunikationskabel, vorzugsweise für ein Einfamilienhaus oder eine Wohnung, dadurch gekennzeichnet, daß für die anzuschließenden Telekommunikationskabel je eine Anschlußvorrichtung (10 bis 18, 21 bis 27) fest angeordnet ist und daß die Anschlußvorrichtungen (10 bis 18, 21 bis 27) über Verbindungselemente (61 bis 65) verbindbar sind.

2. Anordnung nach Anspruch 1, dadurch gekennzeichnet, daß mindestens ein Teil der Anschlußvorrichtungen (10 bis 18, 21 bis 27) jeweils eine Steckvorrichtung umfaßt und daß die Verbindungselemente steckbare Leitungen (61 bis 64) sind.

3. Anordnung nach Anspruch 2, dadurch gekennzeichnet, daß die steckbaren Leitungen (61 bis 64) flexibel und mindestens an jeweils einem Ende mit einem zur Steckvorichtung passenden Stecker versehen sind.

4. Anordnung nach Anspruch 1, dadurch gekennzeichnet, daß die Verbindungselemente Schalter sind.

5. Anordnung nach einem der vorhergehenden Ansprüche, dadurch gekennzeichnet, daß den Anschlußvorrichtungen (10 bis 18, 21 bis 27) Beschriftungsfelder (4; 5) zugeordnet sind.

6. Anordnung nach einem der vorhergehenden Ansprüche, dadurch gekennzeichnet, daß die Anschlußvorrichtungen in zwei Gruppen (10 bis 18; 21 bis 27) angeordnet sind, wobei eine erste Gruppe (10 bis 18) für Telekommunikationskabel, die zu einzelnen Endgeräten führen, und eine zweite Gruppe (21 bis 27) für eine Vermittlungseinrichtung und/oder nach außen führende Telekommunikationskabel vorgesehen ist.

7. Anordnung nach Anspruch 6, dadurch gekennzeichnet, daß mindestens eine der Anschlußvorrichtungen (27) der zweiten Gruppe (21 bis 27) fest mit einer weiteren Steckvorrichtung (28) verbunden ist.

8. Anordnung nach Anspruch 7, dadurch gekennzeichnet, daß die weitere Steckvorrichtung (28) eine Western-Buchse ist.

9. Anordnung nach einem der Ansprüche 6 bis 8, dadurch gekennzeichnet, daß die Gruppen aus jeweils einer Reihe von Anschlußvorrichtungen (10 bis 19; 20 bis 27) bestehen.

10. Anordnung nach Anspruch 9, dadurch gekennzeichnet, daß die Reihen rechtwinklig zueinander angeordnet sind.

11. Anordnung nach einem der vorhergehenden Ansprüche, dadurch gekennzeichnet, daß die Anschlußvorrichtungen (10 bis 18, 21 bis 27) in einem Einsatz für einen Schaltkasten angeordnet sind.

12. Anordnung nach einem der vorhergehenden Ansprüche, dadurch gekennzeichnet, daß weitere fest angeordnete Anschlußvorrichtungen (19; 20) für eine Türsprechanlage vorgesehen sind.
